# EUROPEAN PATENT APPLICATION

(11) **EP 4 840 991 A1**
(43) Date of publication of application: **18.11.2026**
(21) Application number: 25820345.4
(22) Date of filing: 18.04.2025
(51) Int. Cl.: C25B 15/02, C25B 9/70, C25B 11/04, C25B 1/04

(54) **METHOD FOR OPERATING HIGH-TEMPERATURE WATER ELECTROLYSIS STACK**

(30) Priority: 04.06.2024 KR 20240073137
(71) Applicant: SAMSUNG E&A CO., LTD., Seoul 05288 (KR)
(72) Inventor: HEO, Yeon Hyuk, Seoul 05288 (KR); CHOI, Byeong Uk, Seoul 05288 (KR)
(74) Representative: Santarelli
(86) International application number: PCT/KR2025/005300
(87) International publication number: WO 2025/254339

(57) **Abstract**

A method of operating a high-temperature water electrolysis stack is disclosed. The disclosed method of operating a high-temperature water electrolysis stack includes the process of: injecting a reducing gas into a hydrogen electrode of a high-temperature water electrolysis stack (S210); initially raising a temperature of a hydrogen electrode of the high-temperature water electrolysis stack (S220); blocking the reducing gas injected into the hydrogen electrode of the high-temperature water electrolysis stack (S230); performing first oxidation of the hydrogen electrode of the high-temperature water electrolysis stack (S240); re-injecting a reducing gas into the hydrogen electrode of the high-temperature water electrolysis stack (S250); blocking, again, the reducing gas injected into the hydrogen electrode of the high-temperature water electrolysis stack (S260); performing second oxidation of the hydrogen electrode of the high-temperature water electrolysis stack (S270); and re-injecting a reducing gas into the hydrogen electrode of the high-temperature water electrolysis stack and performing normal operation (S280).

## Description

### Technical Field

Disclosed is a method of operating a high-temperature water electrolysis stack. More specifically, disclosed is a method of operating a high-temperature water electrolysis stack capable of improving efficiency of a high-temperature water electrolysis stack.

### Background Art

Recently, with the increasing interest in clean energy, research on hydrogen energy is actively being conducted.

Use of hydrogen energy is preferred because it is advantageous in terms of economic feasibility and environmental friendliness based on high efficiency, and it is clear that it will become an ideal energy circulation system.

In order to use hydrogen energy, a hydrogen production process for supplying hydrogen is required, and an energy conversion device that consumes the produced hydrogen is also required.

Currently, various methods of producing and using hydrogen energy have been developed.

Hydrogen production may be classified, based on raw materials used to produce hydrogen, into methods using conventional hydrocarbons as raw materials (hydrocarbon reforming methods) and methods of producing hydrogen through water.

Hydrocarbon reforming methods are methods of converting conventional hydrocarbon fuels such as diesel, gasoline, and natural gas into hydrogen using heat and a catalyst.

As methods using existing hydrocarbons, methods of combusting hydrocarbons through an internal combustion engine is common, but in the case where hydrocarbons are converted into hydrogen and used, there is an advantage in terms of efficiency.

If hydrogen is used after hydrocarbons are supplied and reformed, rather than supplying stored hydrogen, it can be directly applied to the current fossil fuel-based energy supply system, and there is an advantage wherein hydrogen does not need to be separately stored.

However, since fuels in which various substances are mixed are used, there is a high likelihood that impurities get added to products, and in the case of high-hydrocarbon fuels such as diesel, there is a disadvantage in that problems such as carbon deposition may occur.

On the other hand, a hydrogen production method using water as fuel is a method of decomposing water into hydrogen and oxygen by using heat and electrical energy. This method has an advantage in that there is no great restriction on fuel use because water, which is practically inexhaustible, can be used.

However, decomposing water into hydrogen and oxygen is a process that requires more energy than energy obtained while combining hydrogen and oxygen, and all of the required energy must be supplied from an external source.

Such a method of producing hydrogen through water may be largely classified into thermochemical production and water electrolysis.

Thermochemical production is a method of producing pure hydrogen by adding various substances to water and carrying out chemical reactions.

Water electrolysis is a method of decomposing water (steam) into hydrogen and oxygen by using electrical energy.

Water electrolysis as described above may be classified into an alkaline water electrolysis method, a polymer electrolyte membrane electrolysis method, and a high-temperature electrolysis (HTE) method. Among these, a high-temperature electrolysis method has advantages of enabling highly efficient water decomposition since electrolysis occurs at high temperatures, ease of maintenance, and suitability for large-scale applications.

In addition, the high-temperature electrolysis method enables hydrogen production at high temperature (550 to 900 °C) and operates with a solid oxide electrolysis cell (SOEC).

The SOEC is an electrolysis device using a solid oxide as an electrolyte, and includes a hydrogen electrode, an electrolyte, and an oxygen electrode. In the SOEC, when electricity is applied while supplying steam to the hydrogen electrode, the steam is electrolyzed and oxygen ions migrate through the electrolyte. The oxygen ions which have migrated combine at the oxygen electrode to form oxygen in a gaseous state, leaving only hydrogen at the hydrogen electrode. Accordingly, by decomposing water, gaseous hydrogen and oxygen may each be obtained. This is a reaction (reverse reaction) opposite to that of a solid oxide fuel cell (SOFC), and is also very similar to an SOFC in terms of structure.

In addition, the SOEC operates at a high temperature of about 550 to 900 °C, and has high thermodynamic efficiency at high temperatures. From a thermodynamic perspective, the process of decomposing water into hydrogen and oxygen is a non-spontaneous reaction that requires energy, and the reaction must be caused by supplying energy (△H: enthalpy) required for the reaction. The hydrogen electrode serves to decompose steam, and thus is inevitably exposed to high-temperature steam during operation. However, since a high-temperature steam environment easily corrodes metallic materials and induces oxidation, the steam causes a problem in the performance of the hydrogen electrode. For the reasons described above, Ni/YSZ using nickel (Ni) and yttria-stabilized zirconia (YSZ) is being used in hydrogen electrodes for SOECs, and a method of preventing oxidation of the hydrogen electrode by supplying hydrogen gas (at a concentration of about 10 %) together with high-temperature steam to a space where the hydrogen electrode is located has been proposed. Specifically, conventionally, a reducing gas was injected to prevent oxidation of a hydrogen electrode material (Ni-YSZ or the like), while the temperature was raised (to a temperature of 550 °C to 900 °C), after which the mode was switched to a normal operation mode.

### Disclosure of Invention

### Technical Problem

An embodiment of the present disclosure provides a method of operating a high-temperature water electrolysis stack capable of improving efficiency of a high-temperature water electrolysis stack.

### Solution to Problem

One aspect of the present disclosure provides a method of operating a high-temperature water electrolysis stack, the method including the processes of:
injecting a reducing gas into a hydrogen electrode of a high-temperature water electrolysis stack (S210);
initially raising a temperature of the hydrogen electrode of the high-temperature water electrolysis stack (S220);
blocking the reducing gas injected into the hydrogen electrode of the high-temperature water electrolysis stack (S230);
performing first oxidation of the hydrogen electrode of the high-temperature water electrolysis stack (S240);
re-injecting a reducing gas into the hydrogen electrode of the high-temperature water electrolysis stack (S250);
blocking, again, the reducing gas injected into the hydrogen electrode of the high-temperature water electrolysis stack (S260);
performing second oxidation of the hydrogen electrode of the high-temperature water electrolysis stack (S270); and
re-injecting a reducing gas into the hydrogen electrode of the high-temperature water electrolysis stack and performing normal operation (S280).

In the process S210, the hydrogen electrode of the high-temperature water electrolysis stack may include Ni/YSZ, Ni/LSM, Ni/GDC, or a combination thereof.

In the process S210, the process S250, and the process S280, the reducing gas may be hydrogen or a hydrogen-containing gas.

The process S220 may be a process of raising the temperature of the hydrogen electrode of the high-temperature water electrolysis stack from room temperature to a temperature of 550 to 900 °C.

In the processes S230 to S280, the temperature of the hydrogen electrode of the high-temperature water electrolysis stack may be maintained at 550 to 900 °C.

A total duration of the processes S240 and S270 may be 10 to 20 minutes.

A duration of the process S250 may be 10 to 200 milliseconds.

The method of operating a high-temperature water electrolysis stack may further comprise, between the processes S270 and S280, repeating the processes S250 to S270 one or more times in this order.

A total duration of the process S240 and the processes S270 performed two or more times may be 10 to 20 minutes.

A total duration of the processes S250 performed two or more times may be 10 to 200 milliseconds.

The high-temperature water electrolysis stack may be a solid oxide electrolysis cell stack for a hydrogen production system.

### Advantageous Effects of Invention

A method of operating a high-temperature water electrolysis stack according to an embodiment of the present disclosure may improve efficiency of the high-temperature water electrolysis stack.

### Brief Description of Drawings

FIG. 1 is a flowchart illustrating a conventional method of operating a high-temperature water electrolysis stack.
FIG. 2 is a flowchart illustrating a method of operating a high-temperature water electrolysis stack according to a Reference Example.
FIG. 3 is a flowchart illustrating a method of operating a high-temperature water electrolysis stack according to an embodiment of the present disclosure.

### Mode for the Invention

Hereinafter, a method of operating a high-temperature water electrolysis stack according to an embodiment of the present disclosure will be described in detail with reference to the drawings.

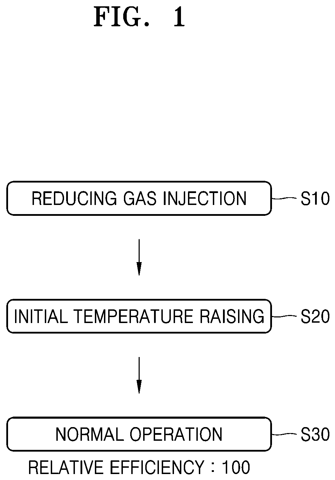

In the present specification, "relative efficiency" refers to a percentage (y/x × 100) obtained by dividing efficiency (y kW/H₂ kg) of a high-temperature water electrolysis stack obtained according to a specific operating method by efficiency (x kW/H₂ kg) of a high-temperature water electrolysis stack obtained according to the conventional operating method shown in FIG. 1.

FIG. 1 is a flowchart illustrating a conventional method of operating a high-temperature water electrolysis stack.

Referring to FIG. 1, a conventional method of operating a high-temperature water electrolysis stack includes the processes of: injecting a reducing gas into a hydrogen electrode of a high-temperature water electrolysis stack (S10); initially raising a temperature of the hydrogen electrode of the high-temperature water electrolysis stack (S20); and performing normal operation while continuously injecting a reducing gas into the hydrogen electrode of the high-temperature water electrolysis stack (S30).

The relative efficiency of the high-temperature water electrolysis stack obtained according to the conventional method of operating a high-temperature water electrolysis stack shown in FIG. 1 is defined as 100 %.

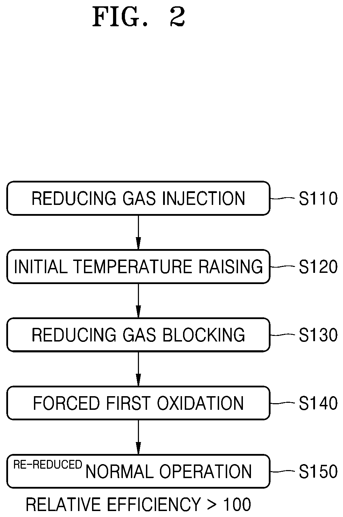

FIG. 2 is a flowchart illustrating a method of operating a high-temperature water electrolysis stack according to Reference Example.

Referring to FIG. 2, a method of operating a high-temperature water electrolysis stack according to Reference Example includes the processes of: injecting a reducing gas into a hydrogen electrode of a high-temperature water electrolysis stack (S110); initially raising a temperature of the hydrogen electrode of the high-temperature water electrolysis stack (S120); blocking the reducing gas injected into the hydrogen electrode of the high-temperature water electrolysis stack (S130); performing first oxidation of the hydrogen electrode of the high-temperature water electrolysis stack (S140); and re-injecting a reducing gas into the hydrogen electrode of the high-temperature water electrolysis stack and performing normal operation (S150).

The relative efficiency of the high-temperature water electrolysis stack obtained according to the method of operating a high-temperature water electrolysis stack according to Reference Example shown in FIG. 2 may exceed 100 %.

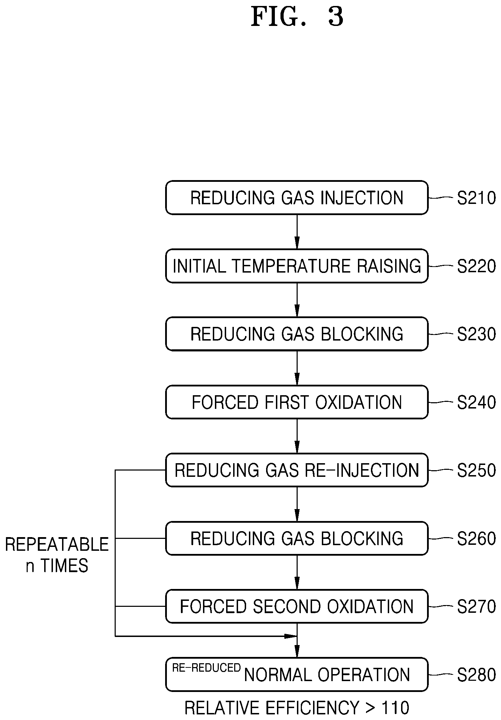

FIG. 3 is a flowchart illustrating a method of operating a high-temperature water electrolysis stack according to an embodiment of the present disclosure.

Referring to FIG. 3, a method of operating a high-temperature water electrolysis stack according to an embodiment of the present disclosure includes the processes of: injecting a reducing gas into a hydrogen electrode of a high-temperature water electrolysis stack (S210); initially raising a temperature of the hydrogen electrode of the high-temperature water electrolysis stack (S220); blocking the reducing gas injected into the hydrogen electrode of the high-temperature water electrolysis stack (S230); performing first oxidation of the hydrogen electrode of the high-temperature water electrolysis stack (S240); re-injecting a reducing gas into the hydrogen electrode of the high-temperature water electrolysis stack (S250); blocking, again, the reducing gas injected into the hydrogen electrode of the high-temperature water electrolysis stack (S260); performing second oxidation of the hydrogen electrode of the high-temperature water electrolysis stack (S270); and re-injecting a reducing gas into the hydrogen electrode of the high-temperature water electrolysis stack and performing normal operation (S280).

In the process S210, the hydrogen electrode of the high-temperature water electrolysis stack may include Ni/YSZ (yttria-stabilized zirconia), Ni/LSM (La₁₋ₓSrₓMnO₃ (0≤x≤0.5)), Ni/GDC (gadolinia-doped ceria), or a combination thereof.

In the process S210, the process S250, and the process S280, the reducing gas may be hydrogen or a hydrogen-containing gas.

The hydrogen-containing gas may include hydrogen and nitrogen.

The process S220 may be a process of raising the temperature of the hydrogen electrode of the high-temperature water electrolysis stack from room temperature (10 to 40 °C) to a temperature of 550 to 900 °C.

In the processes S230 to S280, the temperature of the hydrogen electrode of the high-temperature water electrolysis stack may be maintained at a temperature of 550 to 900 °C. Specifically, in the processes S230 to S280, the temperature of the hydrogen electrode of the high-temperature water electrolysis stack may be maintained at an equivalent level. More specifically, in the processes S230 to S280, the temperature of the hydrogen electrode of the high-temperature water electrolysis stack may be maintained at a temperature of 550 to 600 °C, 600 to 650 °C, 650 to 700 °C, 700 to 750 °C, 750 to 800 °C, 800 to 850 °C, or 850 to 900 °C.

In the processes S240 and S270 (which may be collectively referred to as the "oxidation process"), the hydrogen electrode of the high-temperature water electrolysis stack may be oxidized and expand in volume.

A total duration of the processes S240 and S270 may be equal to a total time for which the reducing gas injected into the hydrogen electrode of the high-temperature water electrolysis stack is blocked between the processes S210 and S280. Specifically, the total duration of the processes S240 and S270 may be 10 to 20 minutes.

In the processes S250 and S280, the hydrogen electrode of the high-temperature water electrolysis stack may be re-reduced to form micropores. An active area increases due to an increase in the triple phase boundary (TPB) caused by these micropores, and thus efficiency of the high-temperature water electrolysis stack may accordingly increase.

A duration of the process S250 (which may be referred to as a "reducing gas re-injection process") may be 10 to 200 milliseconds.

If the total duration of the processes S240 and S270 and the duration of the process S250 are each within the ranges above, the relative efficiency of the high-temperature water electrolysis stack may be improved.

The method of operating a high-temperature water electrolysis stack may further include, between the processes S270 and S280, repeating the sequence of the processes S250 to S270 one or more times in the stated order. In this case, a total duration of the process S240 and the processes S270 performed two or more times may be equal to a total time for which the reducing gas injected into the hydrogen electrode of the high-temperature water electrolysis stack is blocked between the processes S210 and S280. Also, in this case, the total duration of the process S240 and the processes S270 performed two or more times may be 10 to 20 minutes. Also, in this case, a total duration of the processes S250 performed two or more times may be 10 to 200 milliseconds. If the total duration of the process S240 and the processes S270 performed two or more times and the total duration of the processes S250 performed two or more times are each within the ranges above, the relative efficiency of the high-temperature water electrolysis stack may be improved.

In addition, the high-temperature water electrolysis stack (for example, green hydrogen) may be a solid oxide electrolysis cell stack for a system for producing hydrogen, for example, green hydrogen.

Hereinafter, the present disclosure will be described in more detail with reference to Examples, but the present disclosure is not limited to these Examples.

### Preparation Example 1: Manufacture of high-temperature water electrolysis stack

A laboratory-scale SOEC unit cell (effective area of air electrode: 10 cm × 10 cm) was manufactured and subjected to an efficiency experiment according to an operating method. A fuel electrode was manufactured by stacking seven NiO-YSZ sheets, and then stacking a cathode functional layer (CFL) as an uppermost layer. Here, an NiO-YSZ sheet was used as the CFL. The manufactured fuel electrode was pre-sintered at 1100 °C for 1 hour. Subsequently, a YSZ sheet having a thickness of 30 µm was stacked as an electrolyte on the pre-sintered fuel electrode, followed by co-sintering at 1400 °C for 2 hours. An air electrode was formed by coating LSM-YSZ (LaSrMnO₃/8 wt% Y₂O₃+92 wt% ZrO₂) over an effective area using a screen printing method and sintering the coating at 1400 °C for 2 hours, thereby completing a final unit cell. As a result, an SOEC unit cell with a level of 70 W based on 1.4 V and 500 mA/cm² (50 A) was obtained.

### Comparative Example 1: Operation of high-temperature water electrolysis stack

The high-temperature water electrolysis stack prepared in Preparation Example 1 was operated according to the method of operating a high-temperature water electrolysis stack shown in FIG. 1. Specifically, the gas used in the process S10 was hydrogen, the initial temperature increase in the process S20 was performed from room temperature (25 °C) to 725 °C, and the temperature of the hydrogen electrode was maintained at 725 °C while the reducing gas was continuously injected into the hydrogen electrode in the process S30.

### Reference Example 1: Operation of high-temperature water electrolysis stack

The high-temperature water electrolysis stack prepared in Preparation Example 1 was operated according to the method of operating a high-temperature water electrolysis stack shown in FIG. 2. Specifically, the gas used in process S110 was hydrogen, the initially raising the temperature in the process S120 involved raising a temperature from room temperature (25 °C) to 725 °C, the holding time of the process S140 (i.e., oxidation process) was 15 minutes, and the temperature of the hydrogen electrode was maintained at 725 °C while the reducing gas was continuously injected into the hydrogen electrode in the processe S150.

### Reference Example 2: Operation of high-temperature water electrolysis stack

The high-temperature water electrolysis stack prepared in Preparation Example 1 was operated according to the method of operating a high-temperature water electrolysis stack shown in FIG. 3. Specifically, the gas used in process S210 was hydrogen, the initially raising the temperature in the process S220 involved raising the temperature from room temperature (25 °C) to 725 °C, the holding times of the processes S240 and S270 (i.e., the oxidation process) were each 2.5 minutes, the holding time of the process S250 (i.e., the reducing gas re-injection process) was 100 milliseconds, and the temperature of the hydrogen electrode was maintained at 725 °C while the reducing gas was continuously injected into the hydrogen electrode in the processes S250 and S280.

### Reference Example 3: Operation of High-temperature water electrolysis stack

The high-temperature water electrolysis stack prepared in Preparation Example 1 was operated according to the method of operating a high-temperature water electrolysis stack shown in FIG. 3. Specifically, the gas used in the process S210 was hydrogen, the initially raising the temperature in the process S220 involved raising the temperature from room temperature (25 °C) to 725 °C, the holding times of the processes S240 and S270 (i.e., the oxidation process) were each 12.5 minutes, the holding time of the process S250 (i.e., the reducing gas re-injection process) was 100 milliseconds, and the temperature of the hydrogen electrode was maintained at 725 °C while the reducing gas was continuously injected into the hydrogen electrode in the processes S250 and S280.

### Reference Example 4: Operation of high-temperature water electrolysis stack

The high-temperature water electrolysis stack prepared in Preparation Example 1 was operated according to the method of operating a high-temperature water electrolysis stack shown in FIG. 3. Specifically, the gas used in the process S210 was hydrogen, the initially raising the temperature involved raising the temperature from room temperature (25 °C) to 725 °C, the holding times of the processes S240 and S270 (i.e., the oxidation process) were each 7.5 minutes, the holding time of the process S250 (i.e., the reducing gas re-injection process) was 5 milliseconds, and the temperature of the hydrogen electrode was maintained at 725 °C while the reducing gas was continuously injected into the hydrogen electrode in the processes S250, and S280.

### Reference Example 5: Operation of high-temperature water electrolysis stack

The high-temperature water electrolysis stack prepared in Preparation Example 1 was operated according to the method of operating a high-temperature water electrolysis stack shown in FIG. 3. Specifically, the gas used in the process S210 was hydrogen, the initially raising the temperature in the process S220 involved raising the temperature from room temperature (25 °C) to 725 °C, the holding times of the processes S240 and S270 (i.e., the oxidation process) were each 7.5 minutes, the holding time of the process S250 (i.e., the reducing gas re-injection process) was 250 milliseconds, and the temperature of the hydrogen electrode was maintained at 725 °C while the reducing gas was continuously injected into the hydrogen electrode in the processes S250 and S280.

### Example 1: Operation of high-temperature water electrolysis stack

The high-temperature water electrolysis stack prepared in Preparation Example 1 was operated according to the method of operating a high-temperature water electrolysis stack shown in FIG. 3. Specifically, the gas used in the process S210 was hydrogen, the initially raising the temperature in the process S220 involved raising the temperature from room temperature (25 °C) to 725 °C, the holding times of the processes S240 and S270 (i.e., the oxidation process) were each 7.5 minutes, the holding time of the process S250 (i.e., the reducing gas re-injection process) was 100 milliseconds, and the temperature of the hydrogen electrode was maintained at 725 °C while the reducing gas was continuously injected into the hydrogen electrode in the processes S250 and S280.

### Example 2: Operation of high-temperature water electrolysis stack

The high-temperature water electrolysis stack prepared in Preparation Example 1 was operated according to the method of operating a high-temperature water electrolysis stack shown in FIG. 3. Specifically, the gas used in the process S210 was hydrogen, the initially raising the temperature in the process S220 involved raising the temperature from room temperature (25 °C) to 725 °C, the holding times of the processes S240 and S270 (i.e., the oxidation process) were each 5 minutes, the holding time of the process S250 (i.e., the reducing gas re-injection process) was 100 milliseconds, and the temperature of the hydrogen electrode was maintained at 725 °C while the reducing gas was continuously injected into the hydrogen electrode in the processes S250 and S280.

### Example 3: Operation of High-temperature water electrolysis stack

The high-temperature water electrolysis stack prepared in Preparation Example 1 was operated according to the method of operating a high-temperature water electrolysis stack shown in FIG. 3. Specifically, the gas used in the process S210 was hydrogen, the initially raising the temperature in the process S220 involved raising the temperature from room temperature (25 °C) to 725 °C, the holding times of the processes S240 and S270 (i.e., the oxidation process) were each 10 minutes, the holding time of the process S250 (i.e., the reducing gas re-injection process) was 100 milliseconds, and in processes S250 and S280, the temperature of the hydrogen electrode was maintained at 725 °C while the reducing gas was continuously injected into the hydrogen electrode.

### Example 4: Operation of high-temperature water electrolysis stack

The high-temperature water electrolysis stack prepared in Preparation Example 1 was operated according to the method of operating a high-temperature water electrolysis stack shown in FIG. 3. Specifically, the gas used in the process S210 was hydrogen, the initially raising the temperature in the process S220 involved raising the temperature from room temperature (25 °C) to 725 °C, the holding times of the processes S240 and S270 (i.e., the oxidation process) were each 7.5 minutes, the holding time of the process S250 (i.e., the reducing gas re-injection process) was 10 milliseconds, and the temperature of the hydrogen electrode was maintained at 725 °C while the reducing gas was continuously injected into the hydrogen electrode in the processes S250and S280.

### Example 5: Operation of high-temperature water electrolysis stack

The high-temperature water electrolysis stack prepared in Preparation Example 1 was operated according to the method of operating a high-temperature water electrolysis stack shown in FIG. 3. Specifically, the gas used in the process S210 was hydrogen, the initially raising the temperature in the process S220 involved raising the temperature from room temperature (25 °C) to 725 °C, the holding times of the processes S240 and S270 (i.e., the oxidation process) were each 7.5 minutes, the holding time of the process S250 (i.e., the reducing gas re-injection process) was 200 milliseconds, and the temperature of the hydrogen electrode was maintained at 725 °C while the reducing gas was continuously injected into the hydrogen electrode in the processes S250 and S280.

### Example 6: Operation of high-temperature water electrolysis stack

The high-temperature water electrolysis stack prepared in Preparation Example 1 was operated according to the method of operating a high-temperature water electrolysis stack shown in FIG. 3, provided that, between the processes S270 and S280, the processes S250 to S270 were repeated once in the stated order. Specifically, the gas used in the process S210 was hydrogen, the initially raising the temperature in the process S220 involved raising the temperature from room temperature (25 °C) to 725 °C, the holding times (i.e., the oxidation process) of the processes S240, S270 of the first iteration, and S270 of the second iteration were each 5 minutes per process, the holding times of the process S250 of the first iteration and S250 of the second iteration (i.e., the reducing gas re-injection process) were each 50 milliseconds per process, and the temperature of the hydrogen electrode was maintained at 725 °C while the reducing gas was continuously injected into the hydrogen electrode in the processes S250 of the first and second iterations, and S280.

### Example 7: Operation of high-temperature water electrolysis stack

The high-temperature water electrolysis stack prepared in Preparation Example 1 was operated according to the method of operating a high-temperature water electrolysis stack shown in FIG. 3, provided that, between the processes S270 and S280, the processes S250 to S270 were repeated four times in the stated order. Specifically, the gas used in the process S210 was hydrogen, the initially raising the temperature in the process S220 involved raising the temperature from room temperature (25 °C) to 725 °C, the holding times (i.e., the oxidation process) of the processes S240 and S270 of the first to fourth iterations were each 3 minutes per process, the holding times of the process S250 (i.e., the reducing gas re-injection process) of the first to fourth iterations were each 25 milliseconds per process, and the temperature of the hydrogen electrode was maintained at 725 °C while the reducing gas was continuously injected into the hydrogen electrode in the processes S250 of the first to fourth iterations, and S280.

### Example 8: Operation of high-temperature water electrolysis stack

The high-temperature water electrolysis stack prepared in Preparation Example 1 was operated according to the method of operating a high-temperature water electrolysis stack shown in FIG. 3, provided that, between the processes S270 and S280, the processes S250 to S270 were repeated ten times in the stated order. Specifically, the gas used in the process S210 was hydrogen, the initially raising the temperature in the process S220 involved raising the temperature from room temperature (25 °C) to 725 °C, a total duration (i.e., the oxidation process) of processes S240 and S270 of the first to tenth iterations was 15 minutes, a total duration in the process S250 (i.e., the reducing gas re-injection process) of the first to tenth iterations was 100 milliseconds, and the temperature of the hydrogen electrode was maintained at 725 °C while the reducing gas was continuously injected into the hydrogen electrode in the processes S250 of the first to tenth iterations, and S280.

In the methods of operating a high-temperature water electrolysis stack of Comparative Example 1, Reference Examples 1 to 5, and Examples 1 to 8, a total duration of the oxidation processes and a total duration of the reducing gas re-injection processes (excluding the process S150 of FIG. 2 and process S280 of FIG. 3) are summarized and shown in Table 1.

**[Table 1]**

| | Method of operating high-temperature water electrolysis stack | Total holding time of oxidation process (minutes) | Total holding time of reducing gas re-injection process (milliseconds) |
|---|---|---|---|
| Comparative Example 1 | FIG. 1 | - | - |
| Reference Example 1 | FIG. 2 | 15 | - |
| Reference Example 2 | FIG. 3 | 5 | 100 |
| Reference Example 3 | FIG. 3 | 25 | 100 |
| Reference Example 4 | FIG. 3 | 15 | 5 |
| Reference Example 5 | FIG. 3 | 15 | 250 |
| Example 1 | FIG. 3 | 15 | 100 |
| Example 2 | FIG. 3 | 10 | 100 |
| Example 3 | FIG. 3 | 20 | 100 |
| Example 4 | FIG. 3 | 15 | 10 |
| Example 5 | FIG. 3 | 15 | 200 |
| Example 6 | FIG. 3 | 15 | 100 |
| Example 7 | FIG. 3 | 15 | 100 |
| Example 8 | FIG. 3 | 15 | 100 |

### Evaluation Example 1: Evaluation of relative efficiency of high-temperature water electrolysis stack according to method of operating high-temperature water electrolysis stack

A value obtained by dividing the efficiency (ykW/H₂kg) of the high-temperature water electrolysis stack obtained in Comparative Example 1, Reference Examples 1 to 5, and Examples 1 to 8 by the efficiency (xkW/H₂kg) of the high-temperature water electrolysis stack obtained in Comparative Example 1 was expressed as a percentage (y/x × 100) to calculate the relative efficiency, and the results are shown in Table 2.

**[Table 2]**

| | Comparative Example 1 | Reference Example | | | | | Example 1 |
|---|---|---|---|---|---|---|---|
| | | 1 | 2 | 3 | 4 | 5 | |
| Relative efficiency (%) | 100 | 103 | 103 | 104 | 105 | 105 | 113 |

| | Examples | | | | | | |
|---|---|---|---|---|---|---|---|
| | 2 | 3 | 4 | 5 | 6 | 7 | 8 |
| Relative efficiency (%) | 114 | 114 | 113 | 114 | 116 | 117 | 118 |

Referring to Table 2, the relative efficiency of the high-temperature water electrolysis stack obtained in Examples 1 to 8 was found to be higher than the relative efficiency of the high-temperature water electrolysis stack obtained in Reference Examples 1 to 5 and Comparative Example 1.

While the present disclosure has been described with reference to drawings and examples, these are merely exemplary, and those of ordinary skill in the art will understand that various modifications and equivalent other embodiments are possible therefrom. Therefore, the true technical scope of protection of the present disclosure should be determined by the technical spirit of the appended claims.

## Claims

1. A method of operating a high-temperature water electrolysis stack, the method comprising the processes of: injecting a reducing gas into a hydrogen electrode of a high-temperature water electrolysis stack (S210); initially raising a temperature of the hydrogen electrode of the high-temperature water electrolysis stack (S220);
blocking the reducing gas injected into the hydrogen electrode of the high-temperature water electrolysis stack (S230);
performing first oxidation of the hydrogen electrode of the high-temperature water electrolysis stack (S240);
re-injecting a reducing gas into the hydrogen electrode of the high-temperature water electrolysis stack (S250);
blocking, again, the reducing gas injected into the hydrogen electrode of the high-temperature water electrolysis stack (S260);
performing second oxidation of the hydrogen electrode of the high-temperature water electrolysis stack (S270); and
re-injecting a reducing gas into the hydrogen electrode of the high-temperature water electrolysis stack and performing normal operation (S280).

2. The method of claim 1,
wherein, in the process S210, the hydrogen electrode of the high-temperature water electrolysis stack comprises Ni/YSZ, Ni/LSM, Ni/GDC, or a combination thereof.

3. The method of claim 1,
wherein, in the process S210, the process S250, and the process S280, the reducing gas is hydrogen or a hydrogen-containing gas.

4. The method of claim 1,
wherein the process S220 is for raising the temperature of the hydrogen electrode of the high-temperature water electrolysis stack from room temperature to a temperature of 550 to 900 °C.

5. The method of claim 1,
wherein, in the processes S230 to S280, the temperature of the hydrogen electrode of the high-temperature water electrolysis stack is maintained at a temperature of 550 to 900 °C.

6. The method of claim 1,
wherein a total duration of the processes S240 and S270 is 10 to 20 minutes.

7. The method of claim 1,
wherein a duration of the process S250 is 10 to 200 milliseconds.

8. The method of claim 1,
further comprising, between the processes S270 and S280, repeating the processes S250 to S270 in the stated order one or more times.

9. The method of claim 8,
wherein a total duration of the process S240 and the processes S270 performed two or more times is 10 to 20 minutes.

10. The method of claim 8,
wherein a total duration of the processes S250 performed two or more times is 10 to 200 milliseconds.

11. The method of claim 1,
wherein the high-temperature water electrolysis stack is a solid oxide electrolysis cell stack for a hydrogen production system.
